# FASCICULE DE BREVET EUROPEEN

(11) **EP 0 469 504 B1**
(45) Date de publication et mention de la délivrance du brevet: **30.03.1994**
(21) Numéro de dépôt: 91112694.4
(22) Date de dépôt: 29.07.1991
(51) Int. Cl.: B04B 5/04, B04B 11/06

(54) **Dispositif pour séparer par centrifugation deux phases d'un échantillon d'un liquide hétérogène, utilisable notamment pour la séparation du plasma du sang total**
Vorrichtung zur Zentrifugaltrennung von zwei Phasen einer heterogenen Flüssigkeit, insbesondere verwendbar zur Trennung von Blutplasma
Device for centrifugally separating two phases of a heterogeneous liquid, in particular for use in the separation of blood plasma

(30) Priorité: 03.08.1990 FR 9009982
(43) Date de publication de la demande: 05.02.1992
(73) Titulaire: GUIGAN, Anne, F-75005 Paris (FR); GUIGAN, Gilles, Auroville-605101 (IN); GUIGAN, Franck, F-75007 Paris (FR); GUIGAN, Claude Alain, CH-1096 Cully (CH); UDIN, Laure, F-59420 Mouvaux (FR); GUIGAN, Sylvie, F-77940 Thourry-Ferrottes (FR)
(72) Inventeur: Guigan, Jean, deceased (FR)
(74) Mandataire: Weinmiller, Jürgen

(56) Documents cités:
- FR-A- 2 537 281
- US-A- 4 091 989
- US-A- 4 854 933

## Description

La présente invention concerne un dispositif pour séparer par centrifugation deux phases d'un échantillon d'un liquide hétérogène, utilisable notamment pour la séparation du plasma du sang total.

Jusqu'à présent on réalise soit une coagulation, soit une centrifugation du prélèvement sanguin contenu dans un tube. Dans ce dernier cas, les globules rouges correspondant sensiblement à 60 % (en volume) du sang total se dissocient du plasma et tombent au fond du tube. Un opérateur prélève alors à l'aide d'une pipette, au-dessus des globules rouges, la quantité de plasma nécessaire aux analyses prévues. Il arrive qu'à la suite de l'imprécision du geste de l'opérateur vis-à-vis de la zone de séparation entre les deux phases, on se trouve dans l'une ou l'autre des situations suivantes :
- la perte de plasma à collecter est importante,
- des globules rouges se sont introduits dans la pipette et contaminent le plasma à analyser.

La présente invention a pour but d'éviter cet inconvénient et de séparer automatiquement le plasma d'un échantillon de sang, sans intervention manuelle et sans contamination, dès que le prélèvement a été effectué, sans attendre la coagulation, et ceci pour un très faible coût.

Un dispositif comportant les caractéristiques du préambule de la revendication 1 est connu par le document US-A-4854933.

La présente invention a pour objet un dispositif pour séparer par centrifugation deux phases d'un échantillon d'un liquide hétérogène, utilisable notamment pour la séparation du plasma du sang total comportent un entonnoir et un collecteur de plasma amovible, situé en position centrale sous ledit entonnoir, caractérisé en ce qu'il comprend autour d'un axe de révolution un ensemble fermé comprenant :
- un répartiteur-diviseur disposé en position centrale et doté de n compartiments limités par des cloisons radiales, le premier compartiment communiquant d'une part avec l'extérieur par un puits d'introduction d'un prélèvement de sang total, et d'autre part avec le second compartiment par un trop-plein, ledit second compartiment communiquant avec le troisième également par un trop-plein, et ainsi de suite jusqu'au nième compartiment qui, lui, ne communique pas avec le premier, tous les trop-pleins étant situés à la même altitude, ledit répartiteur-diviseur pouvant être rempli progressivement par simple gravité,
- un séparateur en couronne situé autour dudit répartiteur-diviseur et incorporant n récipients communiquant chacun respectivement :
   . avec l'un desdits n compartiments par un orifice situé à une altitude nettement supérieure à celle desdits trop-pleins, pour que le sang contenu dans lesdits compartiments ne se déverse dans lesdits récipients que sous l'effet de la centrifugation,
   . par un étranglement avec l'une parmi n cellules extérieures de séparation pour le stockage des globules rouges, le rapport du volume susceptible d'être contenu dans chaque cellule à celui dudit compartiment associé étant au moins égal au rapport volumique des globules rouges par rapport au sang total, de manière que la surface de séparation entre les globules rouges et le plasma, qui s'établit dans chaque cellule à l'arrêt de la centrifugation, se trouve au-dessous dudit étranglement,
   . entre eux par une partie inférieure commune se rétrécissant pour former ledit entonnoir.

Le principe général du dispositif précédent est de diviser ledit échantillon en une pluralité de quantités définies, de telle sorte que la ligne de séparation entre le plasma et les globules rouges soit également bien déterminée pour permettre une collecte automatique.

En outre ledit collecteur de plasma comporte des moyens d'identification, toutes les informations nécessaires ayant été enregistrées au moment du prélèvement.

Selon une variante, ledit répartiteur-diviseur comprend un n + 1ième compartiment ouvert vers l'extérieur destiné uniquement à évacuer un éventuel excédent dudit prélèvement de sang total.

Le dispositif selon l'invention dont le diamètre est par exemple de l'ordre de 60 à 70 mm est réalisable en matériau plastique moulé ou injecté, neutre vis-à-vis du sang.

D'autres caractéristiques et avantages de la présente invention apparaîtront au cours de la description suivante d'un mode de réalisation donné à titre illustratif mais nullement limitatif. Dans le dessin annexé :
- La figure 1 est une vue schématique de dessus semi-arrachée d'un dispositif selon l'invention mis en place sur une centrifugeuse.
- La figure 2 est une vue schématique en coupe selon la ligne II-II de la figure 1.
- La figure 3 est une vue schématique éclatée en coupe selon la ligne III-III de la figure 1.
- La figure 4 est une vue partielle en perspective de la partie supérieure du séparateur en couronne appartenant au dispositif de la figure 1.
- La figure 5 est une vue partielle en perspective du répartiteur-diviseur appartenant au dispositif de la figure 1.
- La figure 6 est une vue partielle en perspective arrachée de la partie inférieure du séparateur de la figure 4.
- Les figures 7 à 12 illustrent schématiquement les diverses phases de fonctionnement du dispositif selon l'invention.

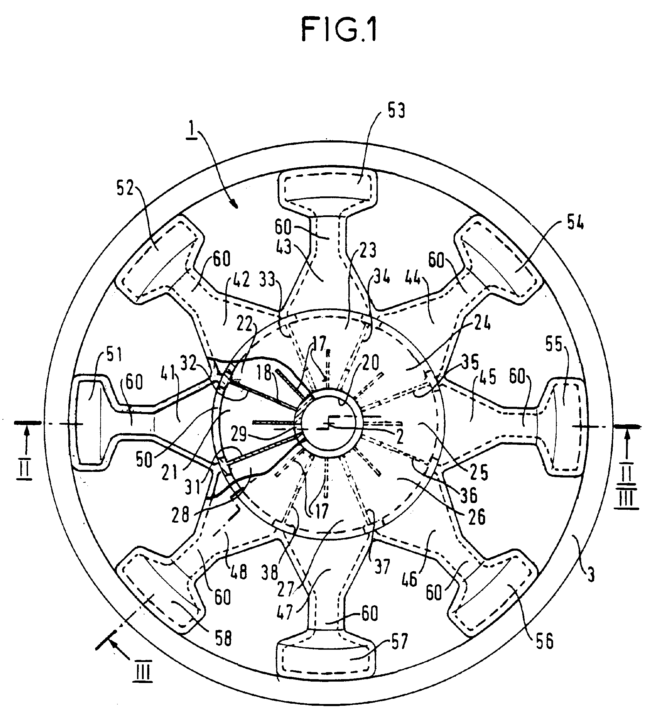

Le dispositif 1 selon l'invention tel qu'il apparaît dans les figures 1, 2, 3 présente un axe de révolution 2 et il est destiné à être disposé sur une centrifugeuse 3.

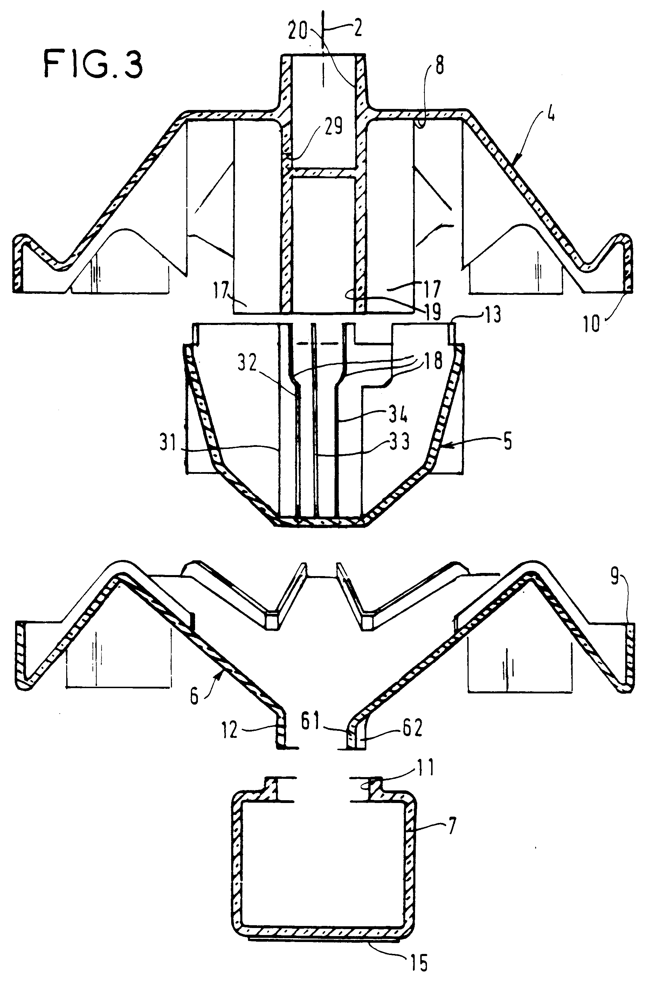

Très schématiquement, sans entrer dans le détail des formes qui seront définies plus loin, on voit que le dispositif 1 peut être réalisé en quatre pièces (voir figure 3). Une partie supérieure 4 formant couvercle porte sur sa face interne 8 une pièce intermédiaire 5 en forme de godet fixée, par exemple par collage ou tout autre moyen approprié, au niveau de son bord supérieur 13. Le bord périphérique 10 de la pièce supérieure 4 est fixé, par exemple par soudage, au bord périphérique 9 d'une pièce inférieure 6 dont la portion centrale en forme d'entonnoir présente une ouverture 12. Un collecteur de plasma 7 sensiblement parallélépipèdique vient s'emmancher en 11 sur cette ouverture 12. Il porte sur l'une de ses faces 15 l'identification de l'échantillon de sang à traiter. Tout moyen optique ou magnétique peut être envisagé. Il n'est donc plus nécessaire de transcrire cette identification entre le récipient contenant le sang et le récipient contenant le plasma, comme c'est le cas dans les procédés antérieurs. Ceci représente une économie de main d'oeuvre et un gain de sécurité considérables.

Les quatre pièces précitées sont en un matériau plastique neutre vis-à-vis du sang. Les pièces 4, 5, 6 peuvent être injectées tandis que la pièce 7 peut être soufflée. Le dispositif 1 présente avantageusement un diamètre compris entre 60 et 70 mm et une hauteur de l'ordre de 20 mm. La quantité de plastique nécessaire est de l'ordre de 6 grammes. Les dimensions et le poids du dispositif 1 sont tels qu'il est possible de le placer sur le plateau d'une mini-centrifugeuse 3 portable.

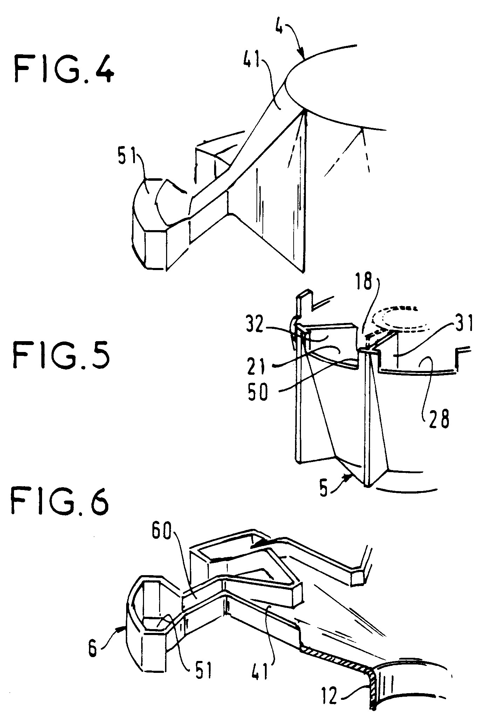

Comme on le voit dans les figures 1, 2 et 3, la pièce supérieure 4 et la pièce intermédiaire 5 définissent un répartiteur-diviseur de sang total. La pièce 5 est divisée intérieurement en huit compartiments 21 à 28 limités par des cloisons radiales 31 à 38 réparties autour d'une cheminée centrale 19. Le premier compartiment 21 communique par une ouverture 29 avec un puits central 20 pour l'introduction d'un prélèvement de sang total. Contrairement à la cloison 31 séparant le premier compartiment 21 du dernier compartiment 28 (voir figures 3 et 5), les cloisons 32 à 38 présentent toutes au même niveau une échancrure 18 mettant en communication successivement le compartiment 21 avec le compartiment 22, et ainsi de suite jusqu'au compartiment 28. On a référencé par le nombre 17 huit ailettes radiales de répartition sur la paroi extérieure de la cheminée centrale 19.

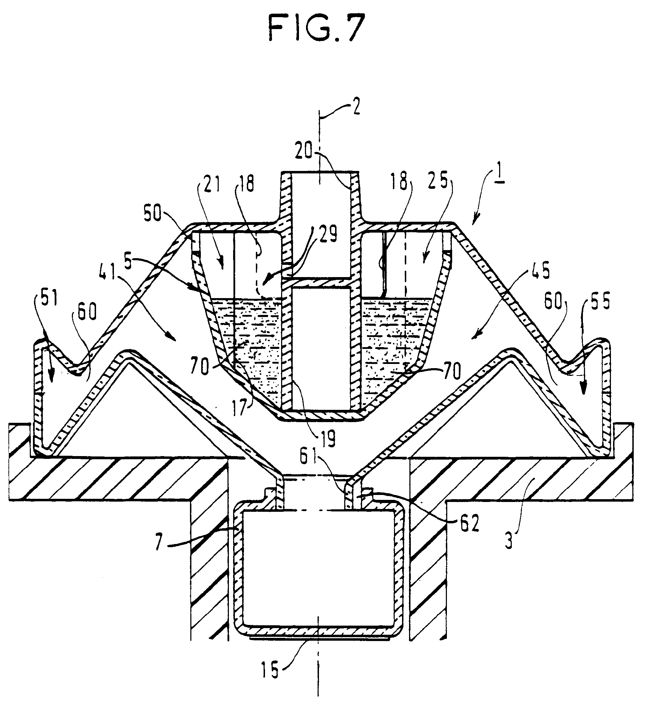

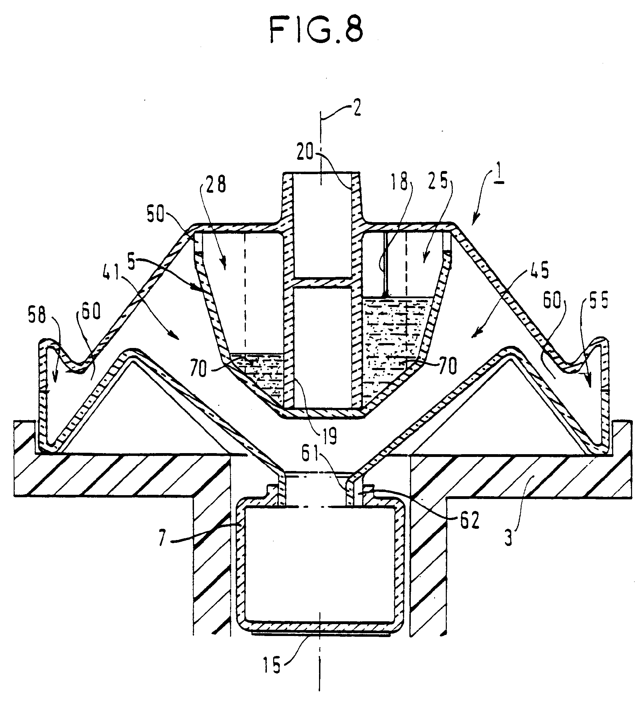

Lorsque l'on introduit un prélèvement de sang total 70 dans le puits 20, le sang 70 s'écoule par l'ouverture 29 dans le premier compartiment 21 jusqu'à ce qu'il parvienne au niveau de l'échancrure 18 de la paroi 32 formant trop-plein ou déversoir vers le second compartiment 22, et ainsi de suite. Dans la plupart des cas, les sept compartiments 21 à 27 se trouveront remplis par gravité de proche en proche, et le compartiment 28 ne le sera que partiellement (voir figures 7 et 8).

On va maintenant préciser comment la paroi extérieure de la pièce 5 et les pièces 4 et 6 définissent un séparateur pour les globules rouges et le plasma.

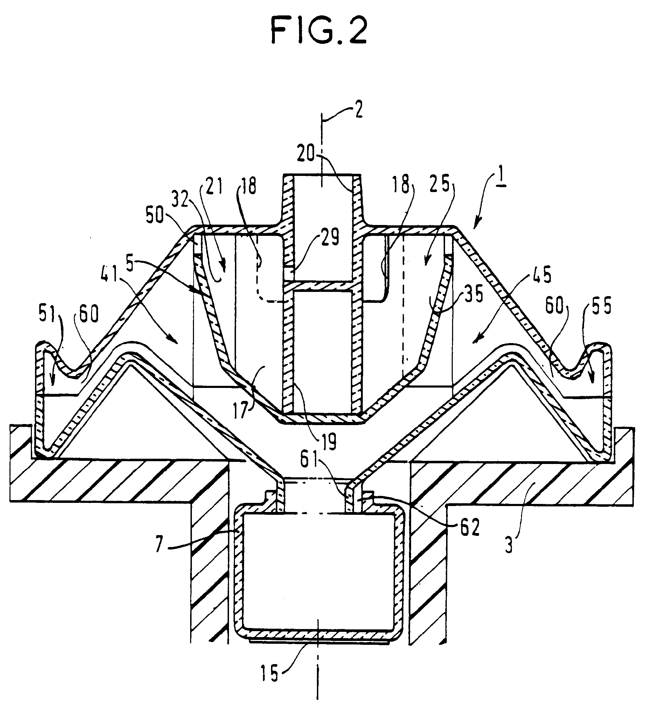

Ce séparateur est disposé en couronne autour du répartiteur-diviseur ; il est formé de huit récipients 41 à 48 associés respectivement aux compartiments 21 à 28 et aboutissant respectivement à huit cellules de séparation extérieures 51 à 58 pour le stockage des globules rouges. Le récipient 41 et la cellule 51, donnés comme exemples, apparaissent plus en détail en coupe dans la figure 2, et en perspective dans les figures 4 et 6. Le récipient 41 communique avec le compartiment 21 par un orifice 50, situé à une altitude nettement supérieure à celle du bord inférieur de l'échancrure de trop-plein 18 ; il est relié par un étranglement 60 à la cellule extérieure 51. Le volume susceptible d'être retenu dans une cellule extérieure 51 à 58 jusqu'à l'étranglement 60 n'est pas inférieur à 60 % du volume susceptible d'être contenu dans le compartiment 21 à 28 correspondant. (La valeur de 60% correspond sensiblement au rapport volumique des globules rouges par rapport au sang total).

Les récipients 41 à 48 communiquent à leur partie inférieure commune en forme d'entonnoir avec le collecteur de plasma 7 défini plus haut. Le bord de l'ouverture 12 de l'entonnoir présente une déformation en forme de nervure 61 (voir figures 2 et 3), définissant avec le bord 11 du collecteur de plasma 7 un orifice d'échappement d'air 62.

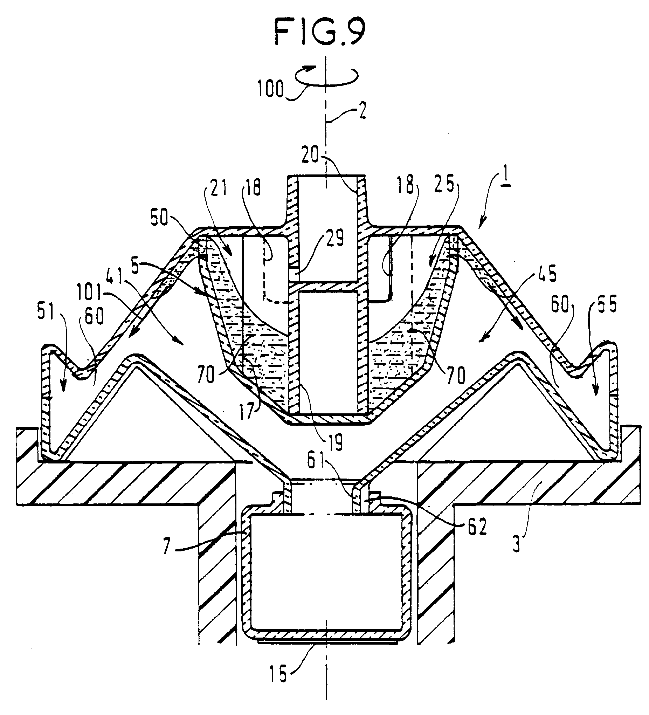

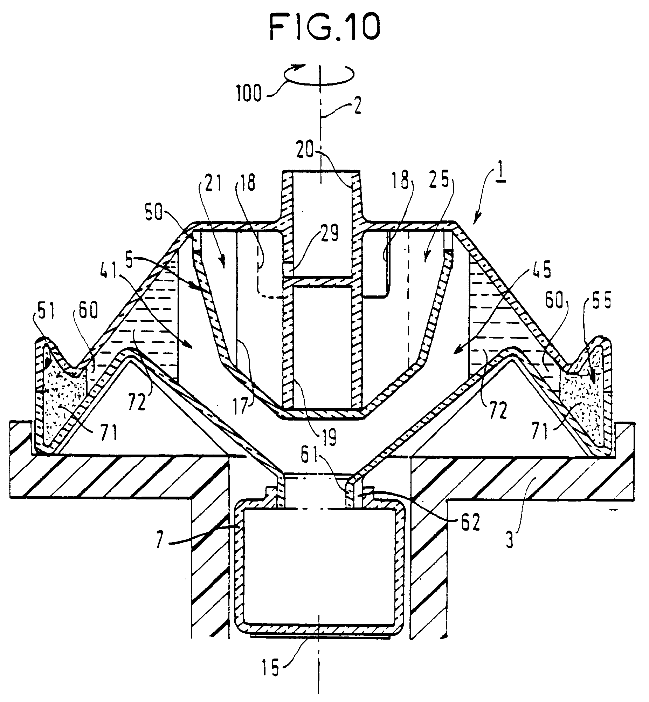

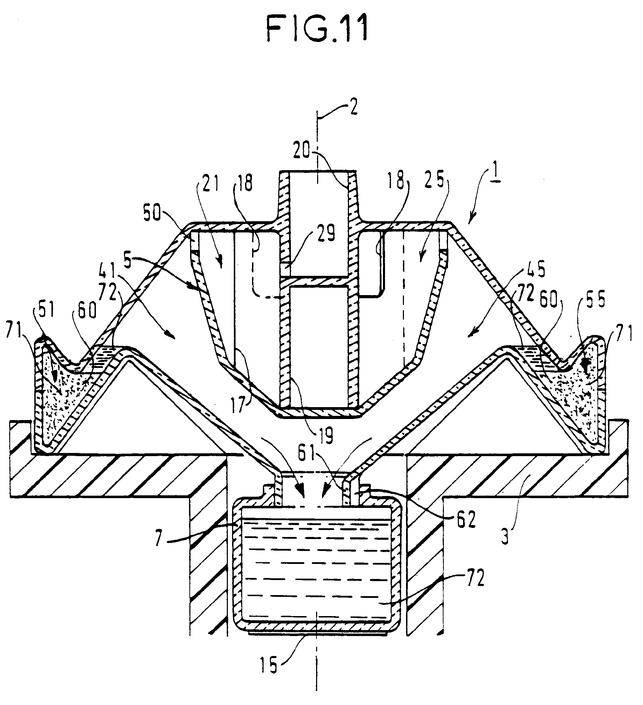

Les figures 9 à 12 illustrent schématiquement les différentes phases du fonctionnement du dispositif 1. Lorsque l'on met en route la centrifugation autour de l'axe 2 (flèche 100 de la figure 9), le sang 70 est chassé des compartiments 21 à 28 à travers les orifices 50 (flèches 101). Les globules rouges 71 se séparent du plasma 72 et se trouvent stockés dans les cellules extérieures de séparation 51 à 58 (figure 10). A l'arrêt de la centrifugation (figure 11), les globules rouges 71, ainsi qu'une très petite quantité de plasma 72, restent prisonniers des cellules extérieures 51 à 58, jusqu'à la hauteur des étranglements 60. Le reste du plasma 72 se déverse par gravité dans la partie inférieure en entonnoir des récipients 41 à 48 et parvient dans le collecteur 7.

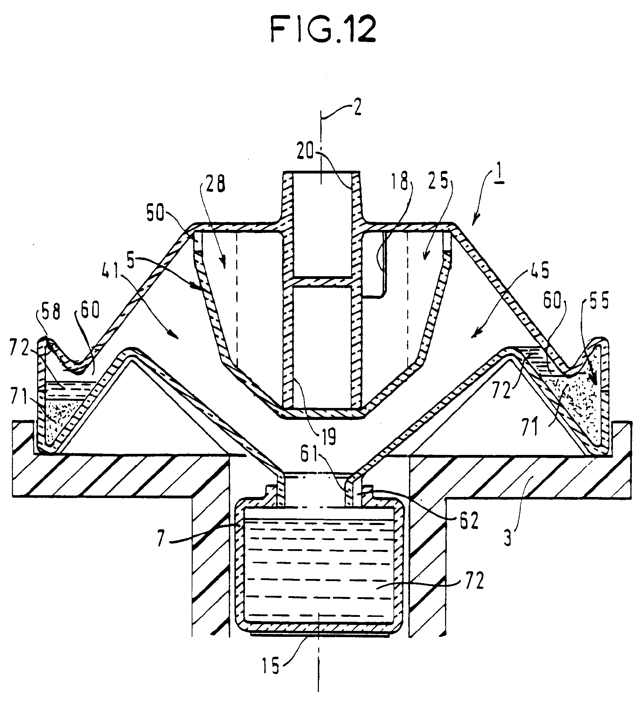

La figure 12 montre l'état de la cellule 58 associée au huitième compartiment 28, après l'arrêt de la centrifugation : la quantité de plasma 72 est insuffisante pour passer le cap de l'étranglement 60, et elle reste donc dans la cellule 58.

On voit que la structure du dispositif selon l'invention et notamment les volumes de ses différentes parties sont tels qu'un peu de plasma peut éventuellement être perdu, mais qu'en aucun cas des globules ne se trouvent mêlés au plasma recueilli dans le collecteur 7.

Pour un prélèvement de sang de l'ordre de 6 ml, le volume de plasma recueilli est voisin de 2,2 ml.

Le collecteur de plasma 7 muni de son identification 15 est désolidarisé des autres parties du dispositif qui sont jetées. Il est prêt à être expédié si l'analyse n'est pas destinée à être faite sur les lieux du prélèvement, ou à être utilisé sur place, notamment pour être intégré à un automate.

Bien entendu, l'invention n'est pas limitée au mode de réalisation qui vient d'être présenté. Ainsi le nombre n peut être choisi différent de huit ; le nombre de pièces constitutives du dispositif 1 peut être différent de quatre, selon la technologie envisagée.

Le dispositif selon l'invention n'a pas son application limitée à la séparation plasma-globules rouges. Il peut être utilisé pour la séparation des deux phases d'un liquide hétérogène, les proportions volumiques de ces deux phases étant connues, et les proportions volumiques des compartiments et des cellules extérieures étant choisies en conséquence.

## Revendications

1. Dispositif pour séparer par centrifugation deux phases d'un échantillon d'un liquide hétérogène, utilisable notamment pour la séparation du plasma du sang total comportant un entonnoir et un collecteur de plasma amovible (7), situé en position centrale sous ledit entonnoir, caractérisé en ce qu'il comprend autour d'un axe de révolution (2) un ensemble fermé comprenant :
- un répartiteur-diviseur disposé en position centrale et doté de n compartiments (21 à 28) limités par des cloisons radiales (31 à 38), le premier compartiment (21) communiquant d'une part avec l'extérieur par un puits d'introduction (20) d'un prélèvement de sang total, et d'autre part avec le second compartiment par un trop-plein (18), ledit second compartiment communiquant avec le troisième également par un trop-plein, et ainsi de suite jusqu'au nième compartiment qui, lui, ne communique pas avec le premier, tous les trop-pleins étant situés à la même altitude, ledit répartiteur-diviseur pouvant être rempli progressivement par simple gravité,
- un séparateur en couronne situé autour dudit répartiteur-diviseur et incorporant n récipients (41 à 48) communiquant chacun respectivement :
. avec l'un desdits n compartiments (21 à 28) par un orifice (50) situé à une altitude nettement supérieure à celle desdits trop-pleins, pour que le sang contenu dans lesdits compartiments ne se déverse dans lesdits récipients que sous l'effet de la centrifugation,
. par un étranglement (60) avec l'une parmi n cellules extérieures de séparation (51 à 58) pour le stockage des globules rouges, le rapport du volume susceptible d'être contenu dans chaque cellule à celui dudit compartiment (21 à 28) associé étant au moins égal au rapport volumique des globules rouges par rapport au sang total, de manière que la surface de séparation entre les globules rouges et le plasma, qui s'établit dans chaque cellule à l'arrêt de la centrifugation, se trouve au-dessous dudit étranglement (60),
. entre eux par une partie inférieure commune se rétrécissant pour former ledit entonnoir.

2. Dispositif selon la revendication 1, caractérisé par le fait que ledit collecteur de plasma comporte des moyens d'identification, toutes les informations nécessaires ayant été enregistrées au moment du prélèvement.

3. Dispositif selon l'une des revendications précédentes, caractérisé par le fait que ledit répartiteur-diviseur comprend un n + 1ième compartiment ouvert vers l'extérieur destiné uniquement à évacuer un éventuel excédent dudit prélèvement.

4. Dispositif selon l'une des revendications précédentes, caractérisé par le fait qu'il est réalisé en matériau plastique neutre vis-à-vis du sang.

## Patentansprüche

1. Vorrichtung zum Zentrifugaltrennen von zwei Phasen einer heterogenen Flüssigkeit, die insbesondere zur Abtrennung des Plasmas aus dem vollständigen Blut verwendbar ist und einen Trichter und einen abnehmbaren Plasmakollektor (7) aufweist, der sich in zentraler Position unter dem Trichter befindet, dadurch gekennzeichnet, daß sie um eine Drehachse (2) eine geschlossene Einheit enthält, die aufweist:
- einen Verteiler-Trenner, der in zentraler Position angeordnet und mit n Abteilen (21 bis 28) versehen ist, die durch radiale Trennwände (31 bis 38) begrenzt sind, wobei das erste Abteil (21) einerseits mit der Außenwelt über einen Schacht (20) zur Einführung einer vollständigen Blutprobe und andererseits mit dem zweiten Abteil über einen Überlauf (18) in Verbindung steht, während das zweite Abteil mit dem dritten Abteil auch über einen Überlauf verbunden ist usw. bis zum n-ten Abteil, das nicht mit dem ersten in Verbindung steht, wobei alle Überläufe sich auf gleicher Höhe befinden und der Verteiler-Trenner progressiv durch einfache Schwerkraft gefüllt werden kann,
- ein ringförmiger Separator, der um den Verteiler-Trenner herum angeordnet ist und n Behälter (41 bis 48) aufweist, die je:
. mit einem der n Abteile (21 bis 28) über eine Öffnung (50) in einer Höhe in Verbindung stehen, die deutlich über der der Überläufe liegt, damit das in den Abteilen enthaltene Blut nur unter der Einwirkung der Zentrifugierung in die Behälter fließt,
. über eine Verengung (60) mit einer von n äußeren Trennzellen (51 bis 58) zur Speicherung der roten Blutkörperchen in Verbindung stehen, wobei das Verhältnis des Volumens, das in jeder Zelle enthalten sein kann, zu dem des dazugehörigen Abteils (21 bis 28) mindestens gleich dem Volumenverhältnis der roten Blutkörperchen zu dem vollständigen Blut ist, so daß die Trennfläche zwischen den roten Blutkörperchen und dem Plasma, die sich in jeder Zelle beim Anhalten der Zentrifugierung einstellt, unterhalb der Verengung (60) liegt,
. untereinander durch einen unteren gemeinsamen Bereich in Verbindung stehen, der sich verjüngt, um den Trichter zu bilden.

2. Vorrichtung nach Anspruch 1, dadurch gekennzeichnet, daß der Plasmakollektor Identifizierungsmittel enthält, wobei alle notwendigen Informationen zum Zeitpunkt der Blutentnahme registriert wurden.

3. Vorrichtung nach einem der vorhergehenden Ansprüche, dadurch gekennzeichnet, daß der Verteiler-Trenner ein n+1-tes Abteil aufweist, das nach außen geöffnet ist und nur dazu dient, einen eventuellen Überschuß der vollständigen Blutprobe abzuführen.

4. Vorrichtung nach einem der vorhergehenden Ansprüche, dadurch gekennzeichnet, daß sie aus einem gegenüber dem Blut neutralen Kunststoffmaterial hergestellt ist.

## Claims

1. Apparatus for separating two phases of a sample of heterogeneous liquid by centrifuging, the apparatus being particularly suitable for separating plasma from whole blood and comprising a funnel and a removable plasma collector (7) situated centrally beneath said funnel, the apparatus being characterized in that it comprises a closed assembly about an axis of revolution (2) and including:
- a distributor-divider disposed centrally and provided with n compartments (21-28) delimited by radial partitions (31-38), the first compartment (21) communicating firstly with the outside via a well (20) for receiving a sample of whole blood and secondly with the second compartment via an overflow (18), the second compartment similarly communicating with the third compartment via an overflow, and so on to the n-th compartment which does not communicate with the first compartment, all of the overflows being situated at the same height, and said distributor-divider being able to be filled progressively merely under gravity;
- a ring separator situated around said distributor-divider and incorporating n receptacles (41-48) each respectively communicating:
. with one of said n compartments (21-28) via an orifice (50) situated at a height which is significantly greater than that of said overflows to ensure that the blood contained in said compartments pours into said receptacles only under the effect of centrifuging;
. via a restriction (60) with one of n outer separation cells (51-58) for storing red corpuscles, the ratio of the volume to be contained in each cell relative to the volume of said associated compartment (21-28) being not less than the volume ratio of red corpuscles relative to whole blood, thereby ensuring that the interface between the red corpuscles and the plasma which is established in each cell when centrifuging stops lies below said restriction (60);
with each other via a common bottom portion narrowing into said funnel.

2. Apparatus according to claim 1, characterized in that said plasma collector includes identity means, with all of the necessary information being recorded at the moment that a sample is taken.

3. Apparatus according to claim 1 or 2, characterized in that said distributor-divider includes an [n+1]th compartment which is open to the outside and intended solely for disposing of any possible excess quantity of said sample.

4. Apparatus according to any preceding claim, characterized in that it is made of a plastic material which is inert relative to blood.
